# EUROPEAN PATENT SPECIFICATION

(11) **EP 2 631 894 B1**
(45) Date of publication and mention of the grant of the patent: **24.11.2021**
(21) Application number: 11833975.3
(22) Date of filing: 02.05.2011
(51) Int. Cl.: G09F 3/04, C09J 7/20

(54) **MANUFACTURING METHOD FOR A LABEL**
HERSTELLUNGSVERFAHREN FÜR EIN ETIKETT
PROCÉDÉ DE PRODUCTION POUR UNE ÉTIQUETTE

(30) Priority: 22.10.2010 JP 2010237694
(43) Date of publication of application: 28.08.2013
(73) Proprietor: Sato Holdings Kabushiki Kaisha, Tokyo 153-0064 (JP)
(72) Inventor: YAMAMURO, Hiromi, Tokyo 153-0064 (JP); FUJII, Yoshihito, Tokyo 153-0064 (JP)
(74) Representative: Grünecker Patent- und Rechtsanwälte PartG mbB
(86) International application number: PCT/JP2011/002529
(87) International publication number: WO 2012/053128

(56) References cited:
- EP-A1- 2 631 894
- JP-A- 2000 239 621
- JP-A- 2000 321 986
- JP-A- 2002 294 177
- JP-A- 2004 184 514
- JP-A- 2005 156 941
- JP-A- 2005 321 422
- JP-A- 2007 320 738
- None

## Description

### {Technical Field}

The present invention relates to a manufacturing method of a label.

### {Background Art}

JP 2005 321 422 A refers to a label paper sheet. According to this document a bonding adhesive is applied on the release sheet first, and then the bonding adhesive is UV cured to form the plurality of bonding parts. After that an adhesive is applied on the release sheet and the bonding parts to form the adhesive layer thereon. There have been known conventional label sheets in which a fore end edge of resin labels are cured by coating application or printing so that the labels are securely separated from their release papers by a label dispenser (for example, refer to PTL 1).

However, it is difficult to completely cure an adhesive by coating application or printing, and labels sometimes cannot be separated from release paper if a label dispenser is used.

To counter this problem, there has been desired a technique that more securely cures the adhesive.

### {Citation List}

### {Patent Literature}

{PTL 1}
Japanese Patent Application Laid-Open No. 09-197971

### {Summary of Invention}

### {Technical Problem}

The present invention is made to solve the problem above. An object of the present invention is to provide a manufacturing method of a label capable of more securely curing an adhesive.

### {Solution to Problem}

The above and other objects of the invention are solved by the method of manufacturing a label according to claim 1. Preferred embodiments are claimed in the dependent claims.

### {Advantageous Effects of Invention}

According to the present invention, it is possible to provide a label and a manufacturing method of the label capable of enhancing the secure curing of an adhesive.

It is possible to cure a rubber-base adhesive that has been difficult to cure by coating application or printing.

It is also possible to provide a label and a manufacturing method of the label capable of preventing an adhesive from exuding from a cut surface of the label.

Particularly in a label for a tire, it is possible to stick the label onto a tire with an automatic labeling apparatus.

### {Brief Description of Drawings}

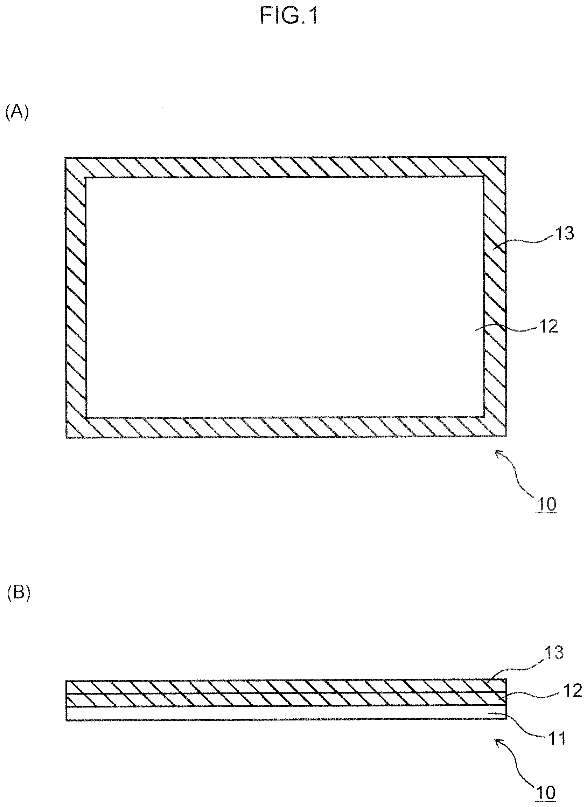

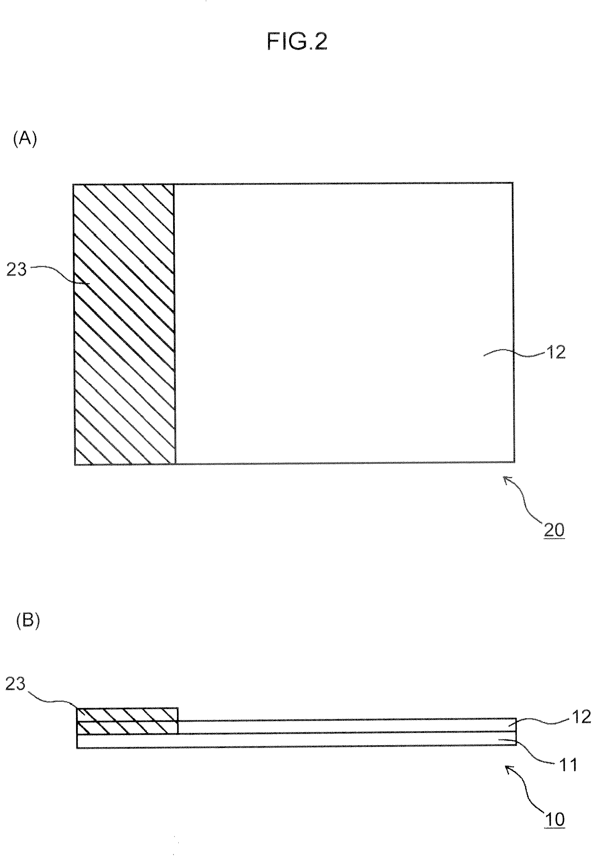

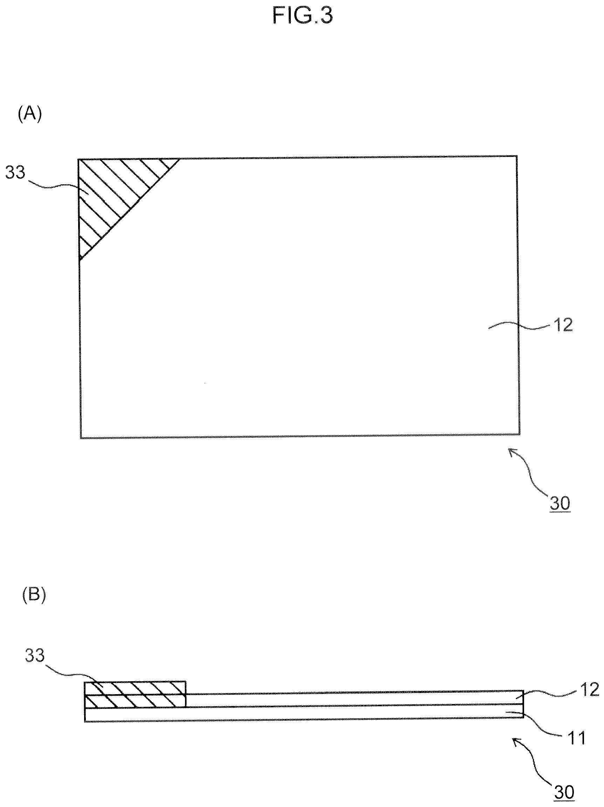

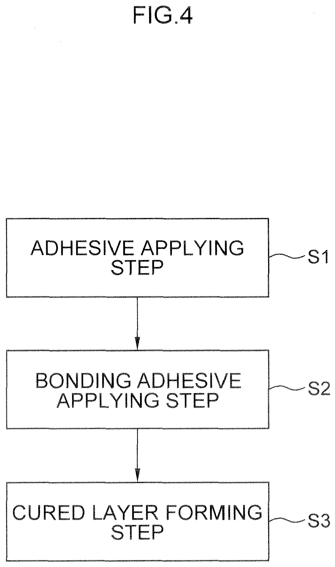

{ Figure 1} Figure 1 illustrates a label manufactured with the inventive method according to a first embodiment, in which (A) is a plan view of the label and (B) is a side view of the label.
{ Figure 2} Figure 2 illustrates a label manufactured with the inventive method according to a second embodiment, in which (A) is a plan view of the label and (B) is a side view of the label.
{ Figure 3} Figure 3 illustrates a label manufactured with the inventive method according to a third embodiment, in which (A) is a plan view of the label and (B) is a side view of the label.
{ Figure 4} Figure 4 is a flow chart showing a manufacturing method according to the present invention.

### {Description of Embodiments}

Hereinafter, description will be provided on the embodiments of the present invention with reference to the drawings.

A label manufactured with the inventive method includes a substrate sheet, an adhesive layer formed an the substrate sheet, and a cured layer formed on a part of the adhesive layer. The cured layer is formed by curing an acrylic-base bonding adhesive.

### (First embodiment)

Figure 1 illustrates a label manufactured with the inventive method according to a first embodiment, in which (A) is a plan view of the label and (B) is a side view of the label.

The reference numeral 10 indicates a label manufactured with the inventive method according to the first embodiment, the reference numeral 11 indicates a substrate sheet, the reference numeral 12 indicates an adhesive layer, and the reference numeral 13 indicates a cured layer.

The substrate sheet 11 may be made of: a paper such as fine a quality paper, coated paper and art paper; a film made of a polyolefin resin such as polyethylene and polypropylene, a polyester (polyethylene-telephthalate) resin, a polycarbonate resin, and a vinyl chloride resin such as polyvinyl chloride, and chlorinated polyvinyl chloride made by combining polyvinyl chloride with chlorine; a synthetic paper manufactured by adding filling material to polyethylene or polypropylene to have a paper-like fibrous form; and a laminated body or a composite body made of the above.

The substrate sheet 11 may be laminated.

In general, a brand name, a manufacture's name, a size, type and oblateness of a tire, and data indicating the above information in a bar code symbol and the like are printed on the substrate sheet 11.

The adhesive forming the adhesive layer 12 is not limited to a specific one, and examples of the adhesive may include an emulsion-type, a solvent-type or a hot-melt type adhesive. Any material such as an acrylic-base material or a rubber-base material may be used. The adhesion characteristics may be selected based on the type of an object on which the label is stuck. For example, the adhesion characteristics may include high adhesion, ultra-high adhesion having further stronger tackiness, or a freezer-grade adhesion if there is no need to remove the label once it is stuck on the object. A rubber-base adhesive which is compatible with a tire is preferably used in the label for sticking on a tire.

The adhesive layer 12 preferably has a thickness of 10 µm or more and 60 µm or less. In a label for sticking on a tire, the adhesive layer 12 preferably has a thickness of 40 µm or more and 60 µm or less.

The cured layer 13 is formed by curing an acrylic-base bonding adhesive.

The acrylic-base bonding adhesive used in the present invention preferably includes an active energy ray curable composition containing (meth) acrylate as a main component. The active energy ray may be an electron ray, a visible light ray, or an ultraviolet ray.

The acrylic-base bonding adhesive may include an acrylic-base additive agent such as a photoinitiator, a polymerization inhibitor, a thickener, a plasticizer, and a coloring agent.

The acrylic-base bonding adhesive used in the present invention preferably includes a radical polymerizable ultraviolet curable composition that is easy to use for the convenience of applying and curing the bonding adhesive on the adhesive layer.

For example, it is preferable to use "ARONIX (registered trademark)" which is a brand name of Toagosei Co., Ltd.

The acrylic-base bonding adhesive is applied on the adhesive layer, and an ultraviolet ray or the like is irradiated onto this acrylic-base bonding adhesive, thereby curing the acrylic-base bonding adhesive as well as the underlying adhesive layer into the cured layer 13.

The cured layer 13 is formed on a part of the adhesive layer 12.

The cured layer 13 preferably has the same thickness as that of the adhesive layer 12.

Specifically, the thickness of the cured layer 13 is preferably 10 µm or more and 60 µm or less. If the label is the one for sticking on a tire, the thickness of the cured layer 13 is preferably 40 µm or more and 60 µm or less.

A sufficient thickness of the cured layer 13 relative to the thickly-applied adhesive layer 12 enables to securely separate the label from the backing sheet.

In the present invention, the bonding adhesive having a strong adhesiveness is applied and then cured so as to form the cured layer, though a printing ink or a varnish is generally used for reducing the adhesiveness.

The cured layer of the present invention includes a bonding adhesive and an adhesive which have already been cured. Consequently, since the adhesion of the adhesives is completely lost and the label is easily separated from the backing sheet, it is possible to stick the label onto a tire with an automatic labeling apparatus.

The cured layer 13 is preferably formed on the entire circumferential edge of the adhesive layer 12, as shown in Figure 1.

Since the cured layer 13 is formed on the entire circumferential edge of the adhesive layer 12, it is possible to separate the label 10 from a release sheet described later from any direction.

As shown in Figure 1(B), it is preferable that the cured layer 13 and a part of the adhesive layer 12 are integrally cured.

Integral curing of the cured layer 13 and the part of the adhesive layer 12 prevents exudation of the adhesive.

In addition, if the cured layer is formed on a cut surface of the label when the label is cut, it is possible to prevent exudation of the adhesive from the cut surface.

The label of the present invention may have an aluminum vapor deposited surface between the substrate sheet 11 and the adhesive layer 12. The aluminum vapor deposited surface blocks penetration of sulfur or the like from the tire into the substrate sheet 11, and enhances the protective performance of the label so as to prevent the deterioration of the label.

It is needless to say that the application of the label is no limited to this, and the present invention is applicable to general label sheets.

The label of the present invention may include the release sheet separably laminated on the adhesive layer 12 and the cured layer 13.

A conventional sheet may be used for the release sheet. Examples of materials for use in the release sheet may include paper having a surface on which silicone is applied through a polyethylene coating, craft paper supercalendered after clay painting, glassine paper, a high quality separator, and various plastic films, etc.

### (Second embodiment)

Figure 2 is drawings showing a label manufactured with the inventive method according to a second embodiment, in which Figure 2(A) is a plan view thereof and Figure 2(B) is a side vie thereof.

The reference numeral 20 indicates the label manufactured with the inventive method of the second embodiment, the reference numeral 11 indicates a substrate sheet and the reference numeral 12 indicates an adhesive layer, and the reference numeral 23 indicates a cured layer.

The label 20 is provided with the cured layer 23 formed on one side of the label.

The label can be easily separated from the backing sheet through the cured layer 23, which enables sticking of the label onto a tire with an automatic labeling apparatus.

### (Third embodiment)

Figure 3 is drawings showing a label manufactured with the inventive method according to a third embodiment, in which Figure 3A is a plan view thereof, and Figure 3(B) is a side view thereof.

The reference numeral 30 indicates the label manufactured with the inventive method of the third embodiment, the reference numeral 11 indicates a substrate sheet and the reference numeral 12 indicates an adhesive layer, and the reference numeral 33 indicates a cured layer.

The label 30 is provided with the cured layer 33 formed at a corner of the label.

The label can be easily separated from the backing sheet due to the cured layer 33; thus it is possible to stick the label onto a tire with an automatic labeling apparatus.

### (Manufacturing method)

The manufacturing method of the label according to the present invention includes an adhesive applying step of applying adhesive on the substrate sheet so as to form the adhesive layer, a bonding adhesive applying step of applying the bonding adhesive on the adhesive layer, and a cured layer forming step of forming the cured layer by irradiating the adhesive layer and the bonding adhesive layer with an active energy ray to cure them.

Description will be provided with reference to Figure 4.

Figure 4 is a flowchart showing the manufacturing method of the label according to the present invention.

First, the substrate sheet is prepared.

In step S1, the adhesive is applied on the substrate sheet with a coating device, a color transferring device, a printer, a brush, a bar coater or the like, and is dried so as to form the adhesive layer (adhesive applying step).

In step S2, the bonding adhesive is applied on the adhesive layer with a color transferring device, a printer, or the like (bonding adhesive applying step).

In step S3, the adhesive layer and the bonding adhesive are irradiated with an active energy ray such as an ultraviolet ray or the like to cure the adhesive layer and the bonding adhesive (cured layer forming step).

In the above described manner, it is possible to manufacture the label according to the present invention.

### [Examples]

Hereinafter, the Examples of the present invention will be described in detail.

The present inventors conducted the following test.

### [Example 1]

The substrate sheet (size: 85 mm × 85 mm, thickness: 75 µm, brand name: "PET75k2424/PT3/8KA" manufactured by Lintech Corporation) was prepared.

The adhesive layer was formed by applying the adhesive (rubber-base adhesive, brand name: "PT3" manufactured by Lintech Corporation) on the substrate sheet with a commercially available coating device and drying the adhesive such that the adhesive layer has a thickness of 40 µm.

Then, a radical polymerizable bonding adhesive (brand name: "ARONIX LCR0239F" manufactured by Toagosei Co., Ltd.) mixed in a medium for flexography was applied on the entire circumferential edge of the adhesive layer with a commercially available color transferring device such that the bonding adhesive layer has a thickness of 40 µm and a width of 4 mm. This bonding adhesive layer is then irradiated with an ultraviolet ray to form the cured layer.

In the above described manner, the label of the Example 1 was manufactured.

### [Example 2]

A radical polymerizable bonding adhesive (brand name: "ARONIX LCR0239F" manufactured by Toagosei Co., Ltd.) mixed in a medium for use in flexography was applied onto one side of the adhesive layer with a commercially available color transferring device such that the bonding adhesive has a thickness of 40 µm and a width of 4 mm. The bonding adhesive is then irradiated with an ultraviolet ray to form the cured layer.

The label of the Example 2 was manufactured in the same condition as that of the Example 1 other than the above condition.

### [Comparative example 1]

Varnish (brand name: "UP200" manufactured by T&K TOKA Corporation) was printed on the entire circumferential edge of the adhesive layer with a commercially available color transferring device such that the bonding adhesive layer has a thickness of 40 µm and a width of 4 mm, and thereafter the varnish was dried to form a low pressure-sensitive adhesion portion whose adhesion was reduced.

The label of the Comparative example 1 was manufactured in the same condition as that of the Example 1 other than the above condition.

Major conditions of the Examples and the Comparative example are shown in Table 1.

**[Table 1]**

| | Object applied on adhesive layer | Cured layer |
|---|---|---|
| Example 1 | Acrylate-base bonding adhesive | Entire Circumference |
| Example 2 | Acrylate-base bonding adhesive | One side |
| *Comparative example* 1 | Printing ink | Entire Circumference |

### (Evaluation)

### <Automatic labeling test>

In the Examples and in the Comparative example, 4200 labels were automatically stuck on commercially available tires in succession with a labeling device whose brand name is "Tough arm" manufactured by Sato Holdings Corporation, and it was confirmed whether or not a glue paddle was generated on a adsorption plate.
○: No collected glue was generated on the adsorption plate.
×: Collected glue was generated on the adsorption plate.

### <Exudation of adhesive>.

The labels of the Examples and of the Comparative example were stuck on commercially available tires, and these tires were left for seven days under a circumstance having a temperature of 40°C and a humidity of 80 %RH.

A visual observation on the stuck state of each label was conducted to confirm whether or not the adhesive was exuded from the cut surface.
○: No exudation occurs
×: Exudation occurs

**[Table 2]**

| | Automatic labeling test | Exudation of adhesive from cut surface |
|---|---|---|
| Example 1 | ○ | ○ |
| Example 2 | ○ | ○ |
| Comparative example 1 | × | × |

As obvious in Table 2, the Example 1 and the Example 2 had preferable results regarding the automatic labeling test and the exudation of the adhesive from the cut surface.

To the contrary, the Comparative example 1 substantially had problems regarding the automatic labeling test and the exudation of the adhesive from the cut surface.

### {Reference Signs List}

10, 20, 30: label
11: substrate sheet
12: adhesive layer
13, 23, 33: cured layer

## Claims

1. A method of manufacturing a label, comprising:
an adhesive applying step of applying an adhesive on a substrate sheet (11) to form an adhesive layer (12);
a bonding adhesive applying step of applying a acrylic-base bonding adhesive on the adhesive layer (12); and
a cured layer forming step of irradiating the adhesive layer (12) and the acrylic-base bonding adhesive with an active energy ray to cure the adhesive layer (12) and the acrylic-base bonding adhesive on the adhesive layer (12), the cured layer (13, 23, 33) being formed on a part of the adhesive layer (12).

2. The method of manufacturing a label according to claim 1, wherein
the cured layer (13, 23, 33) is cured integrally with the part of the adhesive layer (12) under the cured layer (13, 23, 33).

3. The method of manufacturing a label according to claim 1, wherein
the acrylic-base bonding adhesive (12) is a radical polymerizable ultraviolet curable composition.

4. The method of manufacturing a label according to claim 1, wherein
the cured layer (13, 23, 33) has a thickness of 40 µm or more and 60 µm or less.

5. The method of manufacturing a label according to claim 1, wherein
the cured layer (13) is formed on an entire circumference of the adhesive layer (12).

6. The method of manufacturing a label according to claim 1, wherein
the adhesive layer (12) is a rubber-base adhesive.

7. The method of manufacturing a label according to claim 1, wherein
the adhesive layer (12) has a thickness of 40 µm or more and 60 µm or less.

8. The method of manufacturing a label according to claim 1, wherein the cured layer (23) is formed on one side of the label (20).

## Patentansprüche

1. Verfahren zum Herstellen eines Etiketts, das umfasst:
einen Schritt zum Auftragen von Klebstoff, in dem ein Klebstoff auf ein Trägerblatt (11) aufgetragen wird, um eine Klebstoffschicht (12) auszubilden;
einen Schritt zum Auftragen eines Haftklebstoffs, in dem ein Haftklebstoff auf Acrylbasis auf die Klebstoffschicht (12) aufgetragen wird; sowie
einen Schritt zum Ausbilden einer ausgehärteten Schicht, in dem die Klebstoffschicht (12) und der Haftklebstoff auf Acrylbasis mit einem Wirkenergie-Strahl bestrahlt werden, um die Klebstoffschicht (12) und den Haftklebstoff auf Acrylbasis auf der Klebstoffschicht (12) auszuhärten, wobei die ausgehärtete Schicht (13, 23, 33) auf einem Teil der Klebstoffschicht (12) ausgebildet wird.

2. Verfahren zum Herstellen eines Etiketts nach Anspruch 1, wobei
die ausgehärtete Schicht (13, 23, 33) integral mit dem Teil der Klebstoffschicht (12) unter der ausgehärteten Schicht (13, 23, 33) ausgehärtet wird.

3. Verfahren zum Herstellen eines Etiketts nach Anspruch 1, wobei
der Haftklebstoff auf Acrylbasis (12) eine radikalisch polymerisierbare, mittels Ultraviolettlicht aushärtbare Zusammensetzung ist.

4. Verfahren zum Herstellen eines Etiketts nach Anspruch 1, wobei
die ausgehärtete Schicht (13, 23, 33) eine Dicke von 40 µm oder mehr und 60 µm oder weniger hat.

5. Verfahren zum Herstellen eines Etiketts nach Anspruch 1, wobei
die ausgehärtete Schicht (13) an einem Umfang der Klebstoffschicht (12) durchgehend ausgebildet ist.

6. Verfahren zum Herstellen eines Etiketts nach Anspruch 1, wobei die Klebstoffschicht (12) ein Klebstoff auf Gummibasis ist.

7. Verfahren zum Herstellen eines Etiketts nach Anspruch 1, wobei
die Klebstoffschicht (13, 23, 12) eine Dicke von 40 µm oder mehr und 60 µm oder weniger hat.

8. Verfahren zum Herstellen eines Etiketts nach Anspruch 1, wobei die ausgehärtete Schicht (23) an einer Seite des Etiketts (20) ausgebildet wird.

## Revendications

1. Procédé de fabrication d'une étiquette, comprenant :
une étape d'application d'adhésif consistant à appliquer un adhésif sur une feuille de substrat (11) pour former une couche adhésive (12) ;
une étape d'application d'adhésif de liaison consistant à appliquer un adhésif de liaison à base acrylique sur la couche adhésive (12) ; et
une étape de formation de couche durcie consistant à irradier la couche adhésive (12) et l'adhésif de liaison à base acrylique à l'aide d'un rayon à énergie active pour durcir la couche adhésive (12) et l'adhésif de liaison à base acrylique sur la couche adhésive (12), la couche durcie (13, 23, 33) étant formée sur une partie de la couche adhésive (12).

2. Procédé de fabrication d'une étiquette selon la revendication 1, dans lequel la couche durcie (13, 23, 33) est durcie d'un seul tenant avec la partie de la couche adhésive (12) sous la couche durcie (13, 23, 33).

3. Procédé de fabrication d'une étiquette selon la revendication 1, dans lequel l'adhésif de liaison à base acrylique (12) est une composition durcissable par ultraviolets et polymérisable par radicaux.

4. Procédé de fabrication d'une étiquette selon la revendication 1, dans lequel la couche durcie (13, 23, 33) a une épaisseur de 40 µm ou plus et de 60 µm ou moins.

5. Procédé de fabrication d'une étiquette selon la revendication 1, dans lequel la couche durcie (13) est formée sur une circonférence entière de la couche adhésive (12).

6. Procédé de fabrication d'une étiquette selon la revendication 1, dans lequel la couche adhésive (12) est un adhésif à base de caoutchouc.

7. Procédé de fabrication d'une étiquette selon la revendication 1, dans lequel la couche adhésive (12) a une épaisseur de 40 µm ou plus et de 60 µm ou moins.

8. Procédé de fabrication d'une étiquette selon la revendication 1, dans lequel la couche durcie (23) est formée sur un côté de l'étiquette (20).
